(19) **Europäisches Patentamt European Patent Office Office européen des brevets**

(11) **EP 2 917 656 B1**

(12) **FASCICULE DE BREVET EUROPEEN**

(45) Date de publication et mention
de la délivrance du brevet:
**11.01.2017 Bulletin 2017/02**

(21) Numéro de dépôt: **13770918.4**

(22) Date de dépôt: **01.10.2013**

(51) Int Cl.:
*F24F 12/00* (2006.01)    *F24D 5/04* (2006.01)
*F24F 5/00* (2006.01)

(86) Numéro de dépôt international:
**PCT/EP2013/070429**

(87) Numéro de publication internationale:
**WO 2014/053476 (10.04.2014 Gazette 2014/15)**

(54) **SYSTEME DE VENTILATION ET DE CHAUFFAGE D'UN BATIMENT, A PERFORMANCES AMELIOREES**

VERBESSERTES GEBÄUDEBELÜFTUNGS-UND-WÄRMESYSTEM

IMPROVED BUILDING VENTILATION AND HEATING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.10.2012 FR 1259362**

(43) Date de publication de la demande:
**16.09.2015 Bulletin 2015/38**

(73) Titulaire: **Commissariat à l'Énergie Atomique et aux Énergies Alternatives
75015 Paris (FR)**

(72) Inventeurs:
 • **TANGUY, Gwennyn**
   **F-73420 Voglans (FR)**
 • **PAULUS, Cédric**
   **F-73490 La Ravoire (FR)**
 • **ROUGE, Sylvie**
   **F-38320 Brie Et Angonnes (FR)**
 • **MAURAN, Sylvain**
   **F-66170 Millas (FR)**
 • **MAZET, Nathalie**
   **F-66100 Perpignan (FR)**
 • **NEVEU, Pierre**
   **F-66130 St Michel de Liotes (FR)**
 • **STITOU, Driss**
   **F-66570 Saint Nazaire En Roussillon (FR)**
 • **WYTTENBACH, Joël**
   **F-73230 THOIRY (FR)**

(74) Mandataire: **Brevalex
95, rue d'Amsterdam
75378 Paris Cedex 8 (FR)**

(56) Documents cités:
**EP-A1- 2 141 419       WO-A1-00/53979
US-A- 2 959 930        US-A- 5 327 739
US-A1- 2004 134 211    US-A1- 2010 287 953**

## Description

### DOMAINE TECHNIQUE

L'invention se rapporte au domaine des systèmes de ventilation pour bâtiments, en particulier pour le chauffage de ces bâtiments.

Elle s'applique de préférence au domaine des systèmes de ventilation pour bâtiments de l'habitat ou du tertiaire.

### ETAT DE LA TECHNIQUE ANTERIEURE

De l'art antérieur, il est connu des systèmes de ventilation du type comprenant un échangeur à double flux d'air, permettant un transfert thermique entre un flux d'air neuf destiné à alimenter le bâtiment, et un flux d'air vicié sortant de ce même bâtiment, généralement de ses pièces humides comme la cuisine, les WC, la salle de bain, etc. Néanmoins, il existe un besoin d'optimisation de ces systèmes, de manière à améliorer leurs performances globales. Des systèmes de climatisation par adsorption, dits « à roue dessicante » sont également connus, mais ils ne répondent pas aux besoins de chauffage.

Le document WO-00/53979 divulgue un système de ventilation et de chauffage d'un bâtiment correspondant au préambule de la revendication 1.

### EXPOSÉ DE L'INVENTION

Pour répondre à ce besoin, l'invention a tout d'abord pour objet un système de ventilation et de chauffage d'un bâtiment, comprenant une entrée d'air vicié destinée à être raccordée audit bâtiment de manière à être alimentée par l'air vicié sortant de ce dernier, ainsi qu'une sortie d'air neuf destinée à être raccordée audit bâtiment de manière à alimenter ce dernier en air neuf, le système comportant également un premier échangeur à double flux d'air, permettant un transfert thermique entre un flux d'air vicié et un flux d'air neuf destinés à transiter respectivement à travers un passage d'air vicié et un passage d'air neuf pratiqués dans ledit échangeur, ladite entrée d'air vicié du système communiquant avec le passage d'air vicié dudit premier échangeur et ladite sortie d'air neuf du système communiquant avec le passage d'air neuf de cet échangeur.

Selon l'invention, le système comporte en outre un réacteur thermochimique permettant un stockage thermochimique, ledit réacteur étant agencé de manière à pouvoir être traversé par au moins une partie du flux d'air vicié entrant dans ladite entrée d'air vicié du système, pour y engendrer une réaction d'hydratation exothermique provoquant un échauffement dudit flux d'air vicié prévu pour être conduit au moins en partie, après son passage à travers le réacteur, vers ledit passage d'air vicié du premier échangeur.

L'invention est donc remarquable en ce qu'elle met à profit l'humidité du flux d'air vicié sortant du bâtiment pour générer de la chaleur via une réaction exothermique d'hydratation, chaleur qui est ensuite employée pour chauffer le flux d'air neuf à l'aide du premier échangeur. Cela permet d'augmenter les performances globales du système, avec en particulier l'obtention d'un taux de valorisation et d'un coefficient de performances sensiblement plus élevés que dans l'art antérieur. Ce résultat est d'autant plus satisfaisant que l'invention ne présente aucun risque de pollution de l'air intérieur, puisque l'apport de chaleur se fait sur le flux d'air vicié sortant de l'habitat, et non sur l'air neuf entrant dans ce dernier.

L'une des particularités de l'invention réside donc dans l'exploitation du fort taux d'humidité du flux d'air vicié sortant de ce bâtiment, ce flux étant en effet habituellement bien plus humide que l'air extérieur en raison de l'humidité ambiante des pièces humides comme la cuisine, les WC, ou toute autre salle d'eau telle que la salle de bain, ou encore de l'évapotranspiration des occupants et des plantes au sein du bâtiment. Par conséquent, l'entrée d'air vicié du système est préférentiellement raccordée à l'une de ces pièces du bâtiment.

Il est noté que le réacteur thermochimique est un dispositif permettant principalement d'assurer une fonction de stockage thermochimique. Plus précisément, il s'agit d'un stockage inter-saisonnier. Aussi, le réacteur ne permet la mise en place que d'une seule réaction thermochimique à la fois, et n'est traversé que par un unique flux d'air à la fois, celui faisant l'objet de la réaction thermochimique. De préférence, il ne comporte qu'une seule entrée d'air et qu'une seule sortie d'air, de sorte qu'une seule réaction thermochimique n'ait lieu à la fois dans le réacteur. Il s'agit soit de l'hydratation pour obtenir, à partir d'un air vicié sortant du bâtiment, un air plus chaud en sortie du réacteur (en mode hiver), soit de la déshydratation en mode été (régénération du stockage à l'aide, par exemple, de la chaleur solaire).

Avec ce type de réacteur assurant une fonction de stockage thermochimique, en mode chauffage, l'air chaud en sortie du réacteur n'est pas réinjecté dans le bâtiment, contrairement à de l'air neuf réchauffé sortant d'une roue dessicante de l'art antérieur. En effet, une roue dessicante fonctionne simultanément avec une réaction d'hydratation et une réaction de déshydratation. De l'air vicié passe dans la roue et ressort plus froid après une réaction de déshydratation, tandis que simultanément, de l'air neuf entre dans la roue dessicante et, suite à une réaction d'hydratation, cet air neuf est envoyé plus chaud dans le bâtiment. Aussi, l'invention est avantageuse en ce qu'elle prévoit de faire réagir l'air vicié mais pas l'air neuf, ce dernier pouvant alors être introduit dans le bâtiment avec des caractéristiques plus saines.

De préférence, il est prévu des moyens permettant de répartir, de manière contrôlée, le flux d'air vicié entre une première voie vers ledit réacteur et une seconde voie directement vers ledit passage d'air vicié du premier échangeur. Cela permet de contrôler de manière précise la chaleur amenée au premier échangeur par l'intermédiaire du flux d'air vicié. Ces moyens peuvent être du type vanne de régulation, ou encore prendre la forme d'un ventilateur de régulation, de préférence placé sur la conduite amenant au réacteur.

De préférence, le système comporte de plus un échangeur air/liquide présentant un passage d'air ainsi qu'un passage de liquide. Alternativement, il peut s'agir d'un échangeur air/air, en particulier dans le cas où les capteurs solaires thermiques décrits ci-dessous sont des capteurs à air. Néanmoins, par commodité, il sera par la suite fait référence à un échangeur « air/liquide ». Il peut également être envisagé que l'air passe directement dans le capteur à air, sans employer d'échangeur.

Cet échangeur air/liquide permet différents modes de fonctionnement du système selon l'invention, dont certains d'entre-eux vont apparaître à travers les différentes caractéristiques préférentielles mentionnées ci-dessous.

Tout d'abord, ledit échangeur air/liquide peut être conçu de manière à ce que son passage d'air puisse être traversé par le flux d'air neuf sortant du premier échangeur, de sorte que ce flux d'air neuf soit échauffé par un flux liquide chaud traversant ledit passage de liquide, ledit flux d'air neuf étant conduit, à sa sortie de l'échangeur air/liquide, vers ladite sortie d'air neuf du système. Dans ce cas de figure, qui ne nécessite pas forcément le passage du flux d'air vicié au travers du réacteur, la chaleur est apportée au flux d'air neuf via ledit flux liquide chaud, qui est lui-même de préférence destiné à être chauffé directement ou indirectement par des capteurs solaires faisant partie intégrante du système. Comme évoqué ci-dessus, la chaleur solaire peut alternativement provenir de capteurs à air.

Egalement, ledit échangeur air/liquide peut être conçu de manière à ce que son passage d'air puisse être traversé par le flux d'air vicié sortant du réacteur, de sorte que le flux d'air vicié échauffe un flux liquide froid traversant ledit passage de liquide, ledit flux d'air vicié étant conduit, à sa sortie de l'échangeur air/liquide, vers le premier échangeur de manière à traverser ledit passage d'air vicié de ce dernier. Dans ce mode de fonctionnement, la chaleur générée au sein du réacteur est alors utilisée au moins en partie pour l'échauffement du flux liquide traversant l'échangeur air/liquide. Par exemple, le système comprend alors un circuit de chauffage alimenté par ledit flux liquide échauffé par le flux d'air vicié sortant du réacteur. Alternativement ou simultanément, ce flux liquide échauffé peut être utilisé directement ou indirectement pour le chauffage et/ou le préchauffage de l'eau sanitaire (ou ECS, « Eau Chaude Sanitaire).

Une autre possibilité est d'utiliser cette bifurcation à travers l'échangeur air/liquide pour refroidir le flux d'air vicié lorsque ce dernier sortant du réacteur est trop chaud pour transiter à travers le premier échangeur à double flux d'air. A cet égard, une autre solution consiste à utiliser une régulation adaptée plutôt que de perdre une partie de la chaleur générée par le réacteur.

En outre, afin de régénérer efficacement le réacteur, ledit échangeur air/liquide peut être conçu de manière à ce que son passage d'air puisse être traversé par un second flux d'air neuf, de sorte que ce second flux d'air neuf soit échauffé par un flux liquide chaud traversant ledit passage de liquide, ledit second flux d'air neuf échauffé étant conduit, à sa sortie de l'échangeur air/liquide, vers ledit réacteur de manière à y engendrer une réaction de déshydratation endothermique destinée à régénérer ledit réacteur. Ici encore, ledit flux liquide chaud est préférentiellement échauffé par des capteurs solaires faisant partie intégrante du système, de préférence les mêmes que ceux mentionnés ci-dessus.

Selon un autre mode de réalisation, le système est conçu de manière à ce que le passage d'air de l'échangeur air/liquide puisse être traversé par le flux d'air vicié sortant du bâtiment, de sorte que ce flux d'air vicié soit échauffé par un flux liquide chaud traversant ledit passage de liquide, ledit flux d'air vicié étant conduit, à sa sortie de l'échangeur air/liquide, vers ledit passage d'air vicié de l'échangeur.

De préférence, le système est conçu de manière à ce que le passage d'air de l'échangeur air/liquide puisse être traversé par un second flux d'air neuf, de sorte que ce second flux d'air neuf soit échauffé par un flux liquide chaud traversant ledit passage de liquide, ledit second flux d'air neuf échauffé étant conduit, à sa sortie de l'échangeur air/liquide, vers ledit réacteur de manière à y engendrer une réaction de déshydratation destinée à régénérer ledit réacteur, ledit flux d'air sortant du réacteur étant préférentiellement dirigé vers le premier échangeur de chaleur pour traverser le passage d'air vicié, tandis que le second flux d'air neuf traverse préférentiellement le passage d'air neuf.

Selon un autre mode de réalisation, le système comprend un second échangeur à double flux d'air, permettant un transfert thermique entre une partie du flux d'air vicié et un second flux d'air neuf destinés à transiter respectivement à travers un passage d'air vicié et un passage d'air neuf pratiqués dans ledit échangeur, ledit système étant conçu de manière à permettre l'intégration dudit second flux d'air neuf dans au moins une partie dudit flux d'air vicié avant l'entrée de celle-ci dans le réacteur, et étant également conçu de sorte que ladite au moins une partie dudit flux d'air vicié sortant du réacteur puisse passer à travers ledit échangeur air/liquide, puis être acheminé en partie à travers ledit passage d'air vicié dudit second échangeur à double flux d'air.

Ici, l'échangeur air/liquide est utilisé à des fins identiques ou similaires à celles décrites pour le mode de réalisation précédent. De préférence, le système est alors conçu de sorte que ladite au moins une partie du flux d'air vicié sortant du réacteur puisse passer à travers ledit échangeur air/liquide, puis être réparti de manière contrôlée entre une première voie vers ledit passage d'air vicié dudit second échangeur à double flux d'air, et une seconde voie vers ledit passage d'air vicié dudit premier échangeur à double flux d'air.

De préférence, quel que soit le mode de réalisation envisagé, ledit réacteur est un réacteur permettant des réactions d'hydratation exothermiques et des réactions de déshydratation endothermiques entre un matériau réactif solide et la vapeur d'eau contenue dans le flux d'air humide, ledit matériau réactif étant de préférence un sel.

L'invention a également pour objet un bâtiment équipé d'un système de ventilation tel que décrit ci-dessus, ce bâtiment étant de préférence un bâtiment de l'habitat ou du tertiaire.

Enfin, l'invention a pour objet un procédé de ventilation d'un bâtiment à l'aide d'un système tel que décrit ci-dessus, comprenant une étape visant à faire traverser dans ledit réacteur au moins une partie du flux d'air vicié entrant dans ladite entrée d'air vicié du système, de manière à y engendrer une réaction d'hydratation exothermique provoquant un échauffement dudit flux d'air vicié qui est ensuite conduit au moins en partie, après son passage à travers le réacteur, vers ledit passage d'air vicié du premier échangeur.

D'autres avantages et caractéristiques de l'invention apparaîtront dans la description détaillée non limitative ci-dessous.

## BRÈVE DESCRIPTION DES DESSINS

Cette description sera faite au regard des dessins annexés, parmi lesquels ;

- la figure 1 représente une vue schématique de face d'un système de ventilation et de chauffage selon un mode de réalisation préféré de la présente invention, figure sur laquelle ont été représentées les conduites permettant la mise en oeuvre de tous les modes de fonctionnement schématisés sur les figures suivantes ;
- la figure 2 représente le système de la figure 1, dans une première configuration permettant un mode de fonctionnement standard de ventilation double flux, sans utilisation du réacteur;
- la figure 3 représente le système de la figure 1, dans une seconde configuration permettant un mode de fonctionnement basé sur l'utilisation du réacteur pour chauffer indirectement le flux d'air neuf ;
- la figure 4 représente le système de la figure 1, dans une troisième configuration similaire à la précédente, permettant un passage régulé du flux d'air vicié à travers le réacteur ;
- la figure 5 représente le système de la figure 1, dans une quatrième configuration permettant un mode de fonctionnement basé sur l'utilisation d'un flux liquide chaud pour chauffer le flux d'air neuf ;
- la figure 6 représente le système de la figure 1, dans une cinquième configuration permettant un mode de fonctionnement basé sur l'utilisation du flux d'air vicié chauffé par le réacteur, pour chauffer un flux de liquide dédié à une autre application, comme le chauffage hydraulique ;
- la figure 7 représente le système de la figure 1, dans une sixième configuration permettant un mode de fonctionnement dont le but est la régénération du réacteur ; et

- la figure 8 représente un système selon un autre mode de réalisation préféré de l'invention, dans une configuration permettant un mode de fonctionnement basé sur l'utilisation du réacteur pour chauffer indirectement le flux d'air neuf, ainsi que pour chauffer un flux de liquide dédié à une autre application, comme le chauffage hydraulique ;
- la figure 9 représente une vue schématique de face d'un système de ventilation et de chauffage selon encore un autre mode de réalisation préféré de la présente invention, figure sur laquelle ont été représentées les conduites permettant la mise en oeuvre de tous les modes de fonctionnement schématisés sur les figures suivantes ; et
- les figures 10 à 15 représentent le système de la figure 9, dans diverses configurations permettant des modes de fonctionnement différents.

## EXPOSÉ DÉTAILLÉ DE MODES DE RÉALISATION PRÉFÉRÉS

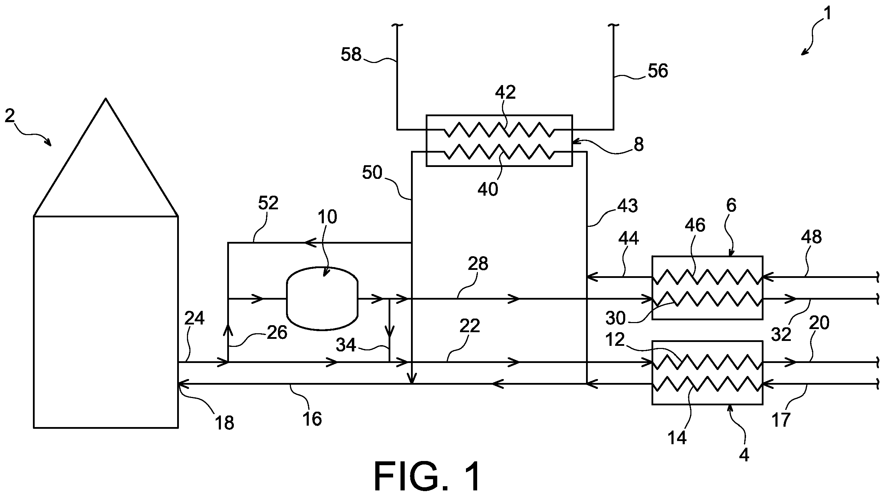

En référence à la figure 1, on peut voir un système de ventilation et de chauffage 1 équipant un bâtiment 2 de l'habitat ou du tertiaire, le système permettant en particulier le traitement et le conditionnement de l'air.

Sur la figure 1, il a été représenté toutes les conduites équipant le système 1. Néanmoins, suivant le mode de fonctionnement retenu, seules certaines d'entre elles sont actives simultanément, à savoir traversées par un flux d'air ou un flux de liquide. Les autres conduites sont alors provisoirement condamnées à l'aide de vannes ou similaires (non représentées), de préférence prévues aux extrémités de ces conduites et/ou aux intersections entre celles-ci. Sur cette figure, il est également à noter que certaines conduites sont associées à des flèches correspondant à la direction du flux les traversant lorsque ces conduites sont actives. Les conduites dépourvues de flèches indiquent que des flux peuvent circuler dans l'une ou l'autre des directions, suivant le mode de fonctionnement mis en oeuvre.

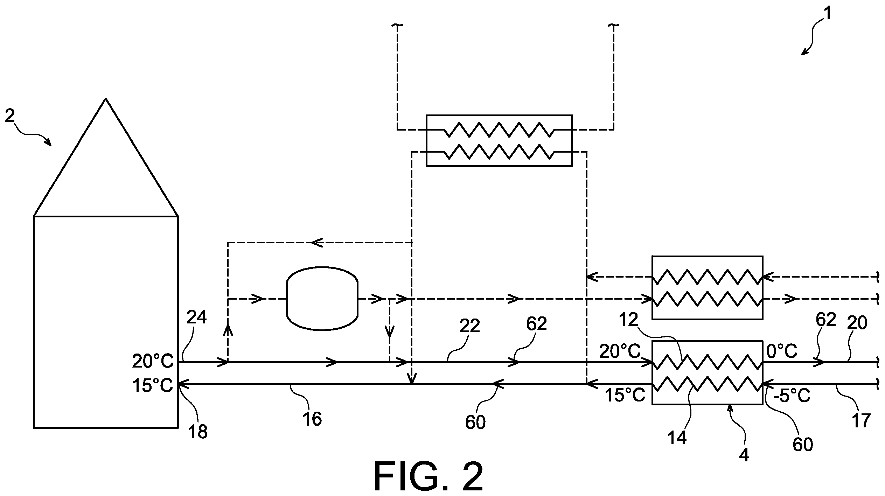

Par conséquent, la figure 1 illustre la conception structurelle du système de ventilation et de chauffage 1, sans faire référence aux divers modes de fonctionnement possibles qui seront décrits ci-après, sur la base des figures 2 à 7.

Le premier échangeur à double flux d'air 4 permet un transfert thermique entre un flux d'air vicié et un flux d'air neuf destinés à transiter respectivement à travers un passage d'air vicié 12 et un passage d'air neuf 14 présents au sein de cet échangeur. Une conduite 17 d'amenée d'air neuf est raccordée à l'entrée du passage 14, tandis qu'une conduite 16 de sortie d'air neuf est raccordée à la sortie de ce même passage 14. Cette conduite 16 chemine jusqu'à une sortie d'air neuf 18 du système, raccordée au bâtiment 2. De manière analogue, une conduite 20 d'extraction d'air vicié est raccordée à la sortie du passage 12, tandis qu'une conduite 22 d'entrée d'air vicié est raccordée à l'entrée de ce même passage 12. Cette conduite 22 chemine jusqu'à une entrée d'air vicié 24 du système, raccordée au bâtiment 2.

Au niveau de l'entrée 24 et de la sortie 18, des ventilateurs (non représentés) sont de préférence agencés de manière à permettre la circulation des flux au sein des conduites 22, 16. Alternativement, ces ventilateurs sont positionnés au niveau de l'échangeur 4. A cet égard, il est noté que des ventilateurs ou des moyens analogues équipent également de préférence les autres circuits du système 1, qui seront décrits ci-dessous.

Une conduite de dérivation 26 est raccordée sur la conduite 22, à proximité de l'entrée d'air vicié 24. La sortie de cette conduite de dérivation 26 est raccordée sur l'entrée du réacteur thermochimique 10, au sein duquel un matériau réactif tel qu'un sel est prévu pour subir une réaction d'hydratation exothermique ou une réaction de déshydratation endothermique, selon le mode de fonctionnement désiré. Il peut par exemple s'agir d'une réaction d'adsorption, ou de toute autre réaction thermochimique.

Il s'agit en particulier de réactions dites solide / solide-gaz, qui se représentent par l'équation suivante :

$$Sd + n\ G \longleftrightarrow Sh + chaleur$$

où Sd et Sh sont respectivement les solides déshydratés et hydratés, G est le gaz, n est le coefficient stoechiométrique.

A cet égard, il est noté que le sel peut être de toute nature réputée appropriée par l'homme du métier. A titre d'exemples, il peut d'agir d'hydrates de $SrBr_2$, $MgSO_4$, $KAl(SO_4)_2$ ou de $MgCl_2$, en particulier pour les réactions dites de chimisorption. Pour le cas des réactions d'adsorption, dites de physisorption, il peut s'agir de Zéolithe ou de Silicagel. Des composites formés à partir des composants cités ci-dessus peuvent également être envisagés.

Le réacteur thermochimique 10 est aussi un dispositif de stockage thermochimique, configuré pour être traversé par un seul flux d'air à la fois. Aussi, il comprend de préférence une entrée unique et une sortie unique d'air, de sorte qu'il se produit dans le réacteur soit une réaction d'hydratation, soit une réaction de déshydratation, mais pas les deux en même temps.

En sortie de réacteur, il est prévu une conduite d'évacuation d'air 28 dont l'autre extrémité est raccordée à l'entrée d'un passage d'air chaud 30 du second échangeur 6, de conception identique ou analogue à celle du premier échangeur. En sortie de ce passage 30, il est prévu une conduite 32 d'extraction d'air chaud. En aval de la sortie du réacteur, une conduite de dérivation 34 permet de raccorder la conduite d'évacuation d'air 28 à la conduite 22 d'entrée d'air vicié.

L'échangeur air/liquide 8 présente un passage d'air 40 ainsi qu'un passage de liquide 42. A une première extrémité, le passage d'air 40 est relié à une conduite 43 qui se raccorde à la fois sur la conduite 16 et sur la conduite 22. De plus, elle se raccorde sur une conduite 44 communiquant avec la sortie d'un passage d'air neuf 46 du second échangeur 6, dont l'entrée est raccordée à une conduite 48 d'amenée d'air neuf.

A la seconde extrémité opposée du passage d'air 40 de l'échangeur 8, ce passage 40 est relié à une conduite 50 qui se raccorde à la fois sur la conduite 16 en aval de la jonction avec la conduite 43, et sur la conduite 22, en aval de la jonction avec la conduite de dérivation 34. De plus, la conduite 50 se raccorde sur une autre conduite de dérivation 52, qui se raccorde quant à elle sur la conduite 26 avant l'entrée dans le réacteur 10.

Enfin, à une première extrémité, le passage de liquide 42 est relié à une conduite 56, tandis que sa seconde extrémité opposée est reliée à une autre conduite 58. Bien que cela n'ait pas été représenté sur la figure 1, le système 1 intègre un ou plusieurs autres éléments raccordés aux conduites 56, 58, tels que ceux qui seront explicitement décrits en référence aux figures 2 à 7 illustrant différents modes de fonctionnement possibles pour ce système 1. A cet égard, il est indiqué que sur chacune de ces figures, les conduites représentées en traits pleins sont les conduites rendues actives pour la mise en oeuvre du mode de fonctionnement désiré, tandis que les conduites illustrées en pointillés restent inactives, c'est-à-dire condamnées par des vannes ou similaires prévues à cet effet. En outre, les températures portées sur ces figures sont données à titre d'exemples indicatifs, permettant de mieux comprendre l'incidence des échanges thermiques provoqués au sein des échangeurs 4, 6, 8.

Tout d'abord en référence à la figure 2, il est représenté une première configuration du système 1, retenue pour l'obtention d'un mode de fonctionnement dit « standard », généralement utilisé durant l'hiver. Il est noté que ce système dit de « VMC double flux » permet le renouvellement de l'air dans le bâtiment. Il est donc en fonctionnement toute l'année. Cependant, bien que cela n'ait ici pas été représenté, le premier échangeur air/air peut être court-circuité lorsque l'écart de température entre l'extérieur et l'intérieur est faible, généralement au printemps et en automne, de manière à éviter des pertes de charge inutiles. Le fonctionnement des ventilateurs est néanmoins maintenu.

Dans ce mode de fonctionnement, le réacteur n'est pas utilisé, seul un échange thermique se produisant au sein du premier échangeur 4 entre d'une part un flux d'air neuf 60 venant de l'extérieur et transitant par le passage 14 avant de cheminer dans la conduite 16 jusqu'à la sortie 18, et d'autre part un flux d'air vicié 62 provenant de l'entrée 24 et transitant par le passage 12 après avoir traversé l'intégralité de la conduite 22.

Dans le cadre de la présente invention, ce mode de fonctionnement est en particulier utilisé lorsqu'il n'y a pas ou peu de besoin en chaleur à l'intérieur du bâtiment, impliquant qu'aucun apport de chaleur venant du réacteur n'est requis. Il s'agit alors d'un fonctionnement reposant sur un simple échange de chaleur entre les deux flux d'air 60, 62.

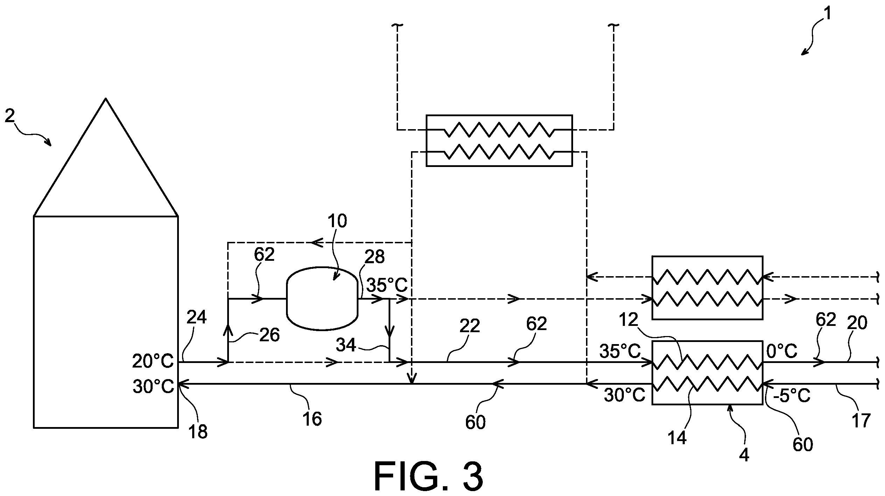

En référence à la figure 3, il est représenté une seconde configuration du système 1, retenue pour l'obtention d'un mode de fonctionnement basé sur l'utilisation du réacteur pour chauffer indirectement le flux d'air neuf 60. Ce mode de fonctionnement, généralement adopté durant l'hiver, permet de bénéficier d'un flux d'air neuf 60 de température supérieure à celle qui serait obtenue par simple échange thermique avec le flux vicié 62.

En effet, l'originalité se situe ici dans le fait que le flux vicié 62 pénétrant par l'entrée 24 est dirigé à travers la conduite de dérivation 26, pour pénétrer ensuite dans le réacteur 10 au sein duquel se produit une réaction exothermique d'hydratation du sel stocké dans ce réacteur. Le flux d'air vicié 62 sort alors avec une température plus élevée, avant d'être dirigé vers la conduite de dérivation 34 puis la conduite 22, à partir de laquelle le flux vicié 62 pénètre dans le passage 12 pour l'échange de chaleur avec le flux d'air neuf 60 entrant dans ce dernier.

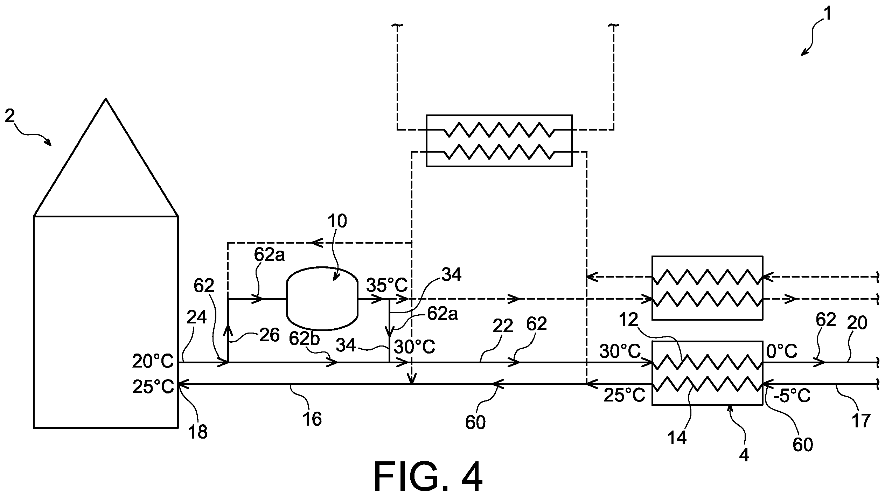

La figure 4 montre une troisième configuration analogue à la seconde, permettant un passage régulé du flux d'air vicié 62 à travers le réacteur. En effet, en fonction des besoins en chaleur, il n'est pas nécessaire de faire transiter l'intégralité du flux vicié 62 à travers le réacteur 10, mais il est possible de n'en faire transiter qu'une partie 62a, l'autre partie 62b restant dans la conduite 22 pour rejoindre directement l'échangeur 4. La partie 62a du flux d'air vicié est réintégrée dans la partie 62b à sa sortie de l'échangeur, pour former ensemble l'intégralité du flux d'air vicié 62 cheminant par la partie aval de la conduite 22, vers l'échangeur 4.

La régulation s'effectue ici par exemple à l'aide d'une vanne de régulation classique (non représentée), ou encore à l'aide d'un ventilateur de régulation (non représenté) placé sur la conduite de dérivation 26. Il peut par exemple s'agir d'un ventilateur à débit variable.

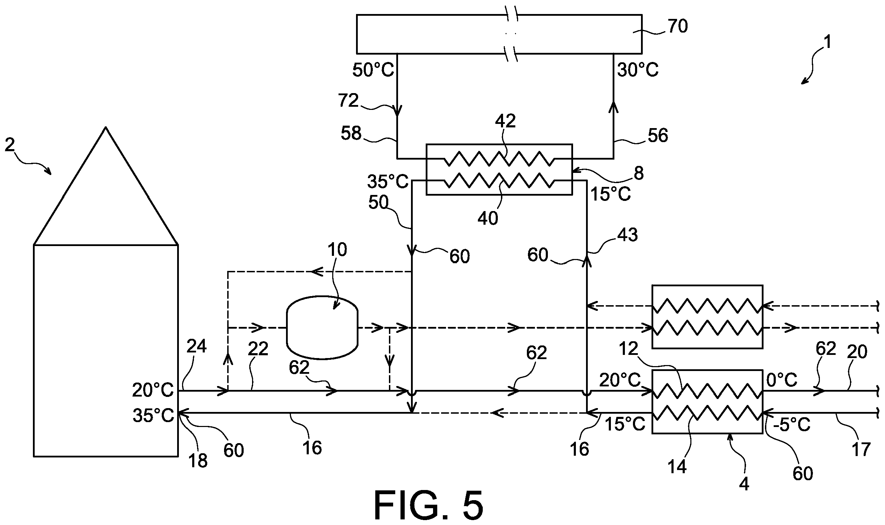

La figure 5 montre une quatrième configuration permettant un mode de fonctionnement basé sur l'utilisation d'un flux liquide chaud pour chauffer le flux d'air neuf 60. Ce mode de fonctionnement est également utilisé en hiver, lorsque de la chaleur peut être apportée par des capteurs solaires thermiques 70, ou toute autre source de chaleur disponible.

En effet, les capteurs 70 permettent ici de chauffer directement ou indirectement le flux liquide 72 circulant à travers la conduite 58, avant de cheminer à travers le passage de liquide 42 de l'échangeur air/liquide 8, puis d'être évacué par la conduite 56 afin d'être à nouveau chauffé par les capteurs solaires 70.

Le flux liquide chaud 72 est prévu pour transmettre de la chaleur au flux d'air neuf 60 transitant par le passage d'air 40, et en provenance de la conduite 43 ramifiée à l'amont de la conduite 16 de laquelle ce flux d'air neuf 60 est extrait, après avoir transité par le passage 14 du premier échangeur 4.

Après l'échange de chaleur au sein de l'échangeur 8, le flux d'air neuf échauffé 60 transite par la conduite 50 avant de rejoindre la partie aval de la conduite 16, puis l'intérieur du bâtiment 2 via la sortie 18. Parallèlement, le flux d'air vicié 62 suit l'un quelconque des chemins décrit sur les figures 2 à 4, c'est-à-dire qu'il passe entièrement, pas du tout, ou en partie à travers le réacteur avant de rejoindre le premier échangeur 4.

Ce mode de fonctionnement, utilisable seulement lorsque l'énergie solaire est suffisante, permet avantageusement d'économiser l'énergie du réacteur.

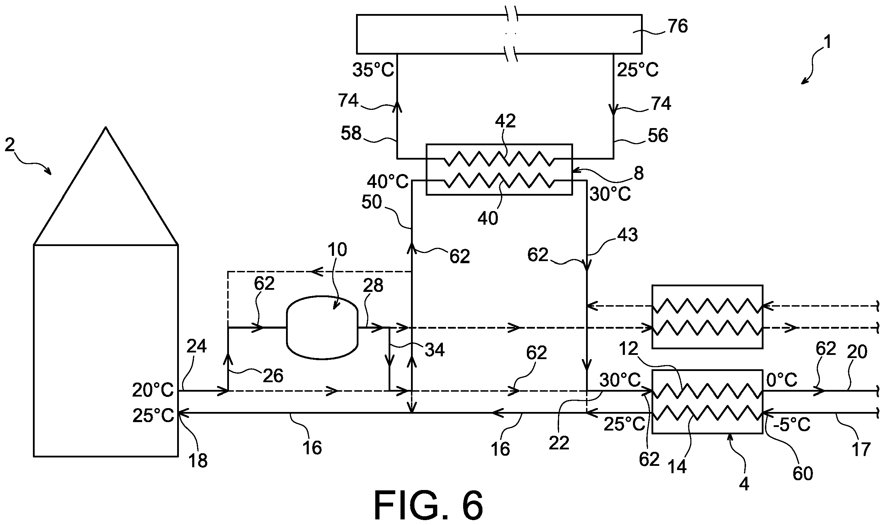

La figure 6 montre une cinquième configuration permettant un mode de fonctionnement basé sur l'utilisation du flux d'air vicié 62 chauffé par le réacteur, pour chauffer un flux de liquide 74 dédié à une autre application, de préférence le chauffage hydraulique et/ou l'eau chaude sanitaire. En effet, un circuit de chauffage hydraulique 76 du bâtiment, représenté uniquement schématiquement, est alimenté directement ou indirectement par un flux liquide 74 initialement froid ou frais transitant par la conduite 56, avant de pénétrer dans le passage de liquide 42 de l'échangeur 8.

Ce flux liquide 74 est prévu pour recevoir de la chaleur du flux vicié 62 sortant du réacteur 10. Par conséquent, dans ce mode de fonctionnement, la chaleur dégagée dans le réacteur 10 est utilisée non seulement pour chauffer le flux d'air neuf 60 au sein du premier échangeur 4, mais également, en amont, pour chauffer le flux de liquide 74 servant à d'autres applications comme le chauffage hydraulique. Alternativement ou simultanément, le flux liquide échauffé 74 pourrait être utilisé directement ou indirectement pour le chauffage et/ou le préchauffage de l'eau sanitaire (ou ECS, « Eau Chaude Sanitaire »). Dans tous les cas, bien que cela n'apparaisse pas sur les figures, des moyens appropriés sont prévus pour assurer le raccordement commandé des conduites 56, 58 avec les éléments adéquats 70, 76 en fonction du mode de fonctionnement retenu.

Pour l'introduction du flux d'air vicié 62 à travers le passage 40, ce dernier sortant du réacteur 10 transite successivement par la conduite 28, la conduite 34, la conduite 22, puis la conduite 50. A sa sortie du passage 40, il transite par la conduite 43 avant de rejoindre la partie aval de la conduite 22 et le passage 12 de l'échangeur 4 au sein duquel s'effectue un échange de chaleur avec le flux d'air neuf 60 transitant par le passage 14 et rejoignant la sortie 18 directement par la conduite 16.

Cette configuration peut également être utilisée pour produire uniquement de la chaleur pour les besoins hydrauliques. Auquel cas, l'air neuf fourni à l'habitat serait à la même température que dans le cas d'une utilisation standard d'une VMC double flux.

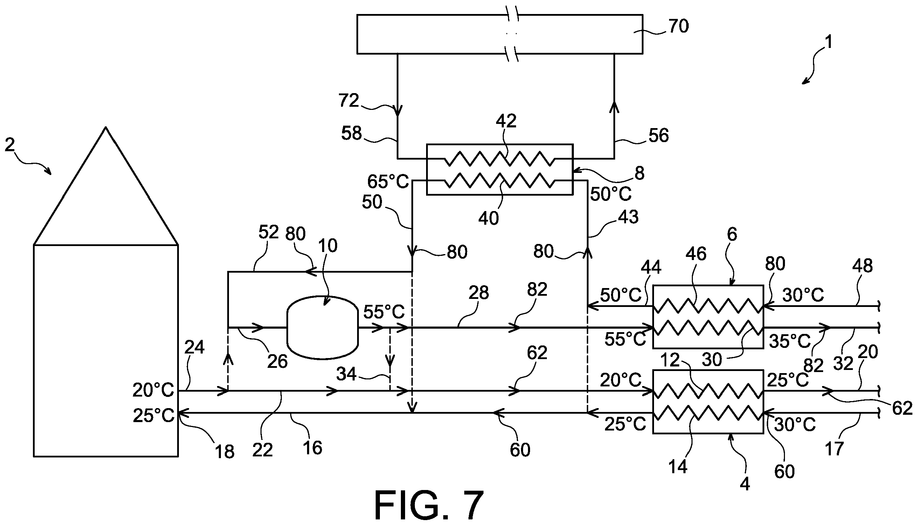

Enfin, la figure 7 représente le système 1 dans une sixième configuration permettant un mode de fonctionnement dont le but est la régénération du réacteur 10, ce mode de fonctionnement étant préférentiellement retenu durant l'été. Avant tout, il est noté que le mode de fonctionnement standard schématisé sur la figure 2 peut être activé durant la régénération, étant donné que les circuits fluidiques associés à ces deux modes sont ici indépendants. Par conséquent, durant cette régénération du sel du réacteur, le système de VMC double flux peut continuer à fonctionner.

Pour la régénération du sel du réacteur, il est également utilisé l'énergie solaire via les capteurs solaires 70 raccordés à l'échangeur air/liquide par les conduites 56, 58. Ainsi, le flux liquide chaud 72 circule à travers le passage de liquide 42 pour chauffer un second flux d'air neuf 80 pénétrant dans le second échangeur 6 par la conduite 48, avant de transiter par la conduite 44 puis la conduite 43 l'amenant à l'échangeur air/liquide 8.

Après l'échange de chaleur au sein de cet échangeur 8, le flux d'air échauffé 80 transite par la conduite 50 puis par la conduite de dérivation 52 avant de pénétrer dans le réacteur 10, via l'autre conduite de dérivation 26. Au sein de ce réacteur 10, il se produit une réaction endothermique de déshydratation du sel, permettant sa régénération en vue d'emmagasiner de l'énergie pour l'hiver suivant.

Après sa sortie du réacteur, le flux d'air 82 qui vient de réagir est transporté par la conduite 28 jusqu'au passage 30 du second échangeur, au sein duquel un échange de chaleur s'effectue avec le flux 80 dont il est issu.

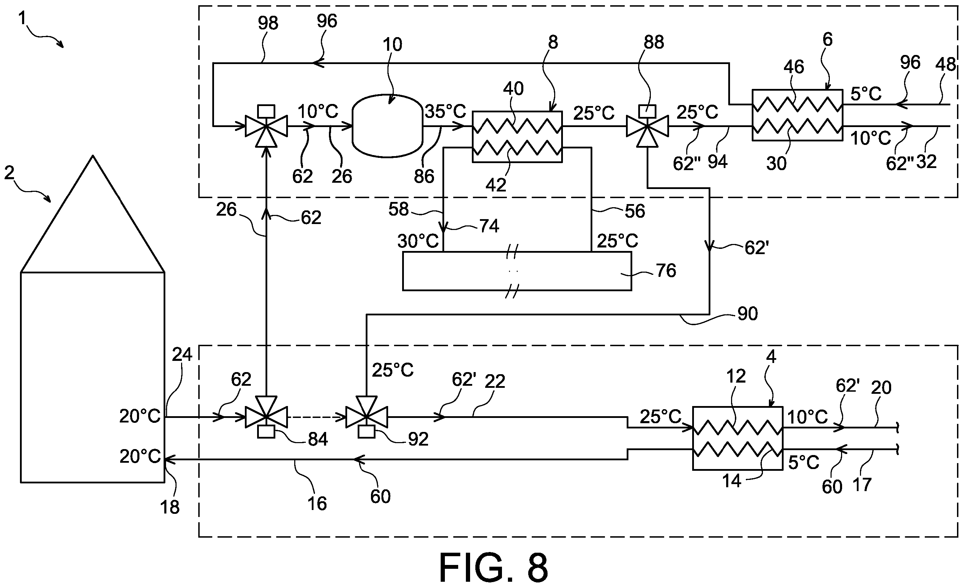

En référence à présent à la figure 8, il est représenté un système 1 selon un autre mode de réalisation préféré. Ce mode comporte de nombreuses similitudes avec le précédent, de sorte que des références numériques identiques ont été adoptées pour les éléments identiques ou similaires.

Dans cet autre mode de réalisation, les éléments permettant le mode de fonctionnement standard ont été conservés. Par ailleurs, le réacteur 10 est toujours accessible au flux d'air vicié 62 par la conduite de dérivation 26 issue de la conduite 22 reliant l'entrée 24 au passage d'air vicié 12 du premier échangeur. Ici aussi, une vanne 84 permet de réguler la partie du flux vicié qui passe par le réacteur, l'autre partie passant directement par la conduite 22 pour rejoindre le premier échangeur. A cet égard, dans la configuration représentée, le mode de fonctionnement obtenu fait transiter l'intégralité du flux d'air vicié 62 par le réacteur 10.

Ce mode de fonctionnement est similaire à celui de la figure 6 pour le premier mode de réalisation, à savoir qu'il est basé sur l'utilisation du flux d'air vicié 62 chauffé par le réacteur, pour chauffer à son tour d'une part le flux d'air neuf 60, et d'autre part un flux de liquide 74 dédié à une autre application, préférentiellement le chauffage hydraulique ou le chauffage de l'eau sanitaire. Néanmoins, il permet au réacteur de traiter un débit d'air plus important, et donc une quantité de vapeur d'eau plus élevée, puisqu'il exploite l'air extérieur en plus de l'air vicié, comme cela va être décrit ci-dessous.

En effet, le circuit de chauffage hydraulique 76 du bâtiment est ici aussi alimenté directement ou indirectement par le flux liquide 74 initialement froid ou frais transitant par la conduite 56, avant de pénétrer dans le passage de liquide 42 de l'échangeur 8. Ce flux liquide 74 est donc prévu pour recevoir de la chaleur du flux 62 sortant du réacteur 10, avant de rejoindre le circuit de chauffage 76 par la conduite 58.

Après la réaction exothermique d'hydratation du sel dans le réacteur, le flux d'air vicié échauffé 62 sort effectivement du réacteur 10 par une conduite 86 raccordée au passage d'air 40 de l'échangeur 8. Ensuite, en sortant de l'échangeur 8, il rencontre une vanne de régulation 88 permettant d'une part d'acheminer une partie 62' du flux d'air vicié 62 vers le passage d'air vicié 12 du premier échangeur 4, via une conduite dédiée 90 raccordée sur le conduit 22 par une vanne 92, et d'autre part d'acheminer l'autre partie 62" du flux d'air vicié 62 vers le passage d'air 30 d'un second échangeur à double flux d'air 6, via une conduite dédiée 94.

Ce second échangeur à double flux d'air présente également un passage d'air neuf 46 destiné à être traversé par un second flux d'air neuf 96, pour rejoindre ensuite une conduite 98 permettant d'intégrer ce flux d'air neuf 96 au flux d'air vicié 62 avant son entrée dans le réacteur. Par conséquent, le flux d'air vicié entrant dans le réacteur correspond ici en réalité au mélange entre le flux d'air vicié sortant du bâtiment et le second flux d'air neuf provenant du second échangeur.

Ainsi, dans ce mode de fonctionnement, la chaleur dégagée dans le réacteur 10 est utilisée non seulement pour chauffer le flux d'air neuf 60 au sein du premier échangeur 4, mais également, en amont, pour chauffer le flux de liquide 74 servant à d'autres applications comme le chauffage hydraulique. La partie 62' du flux d'air vicié est ainsi rendue à la conduite 22 à une température qui peut être sensiblement similaire à celle du flux 62 sortant du bâtiment, mais en étant plus sec.

Ici aussi, cette configuration peut également être utilisée pour produire uniquement de la chaleur pour les besoins hydrauliques. Auquel cas, l'air neuf fourni à l'habitat serait à la même température que dans le cas d'une utilisation standard d'une VMC double flux.

Il est alternativement possible de déplacer la vanne de régulation 88 avant l'entrée dans l'échangeur 8, c'est-à-dire entre la sortie du réacteur 10 et le passage d'air 40, sur la conduite 86.

Bien que cela n'ait pas été représenté, ce mode de réalisation offre également d'autres modes de fonctionnement qui apparaîtront aisément au vu des enseignements du premier mode de réalisation, applicables de manière analogue. Il s'agit en particulier du mode de fonctionnement standard et du mode permettant la régénération du sel du réacteur.

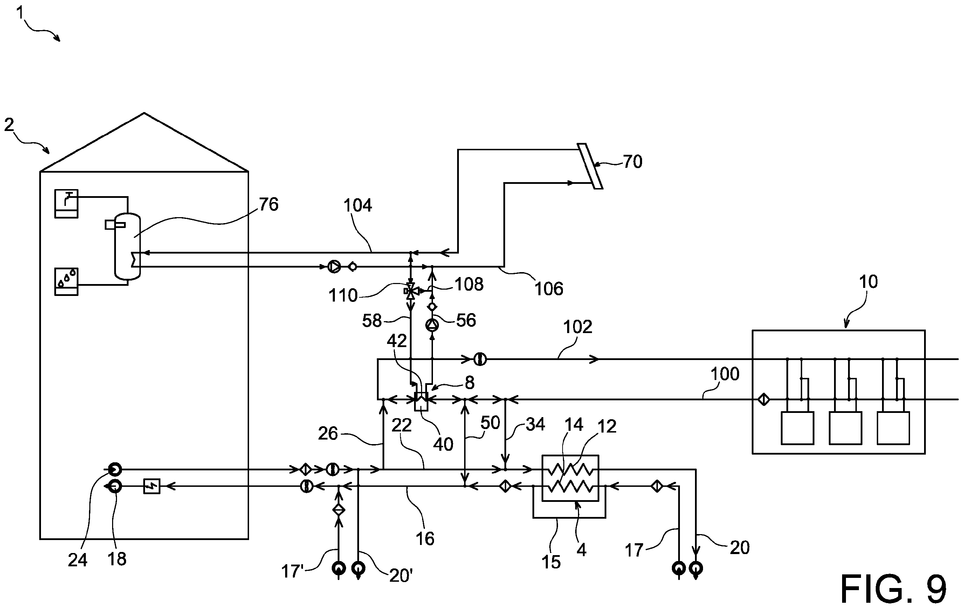

En référence à la figure 9, il est représenté un système de ventilation et de chauffage 1 selon encore un autre mode de réalisation.

Sur la figure 9, il a été représenté toutes les conduites équipant le système 1. Néanmoins, suivant le mode de fonctionnement retenu, seules certaines d'entre elles sont actives simultanément, à savoir traversées par un flux d'air ou un flux de liquide. Les autres conduites sont alors provisoirement condamnées à l'aide de vannes ou similaires (non représentées), de préférence prévues aux extrémités de ces conduites et/ou aux intersections entre celles-ci. Sur cette figure, il est également à noter que certaines conduites sont associées à des flèches correspondant à la direction du flux les traversant lorsque ces conduites sont actives. Ici, les conduites pourvues de deux flèches de sens opposés indiquent que des flux peuvent circuler dans l'une ou l'autre des directions, suivant le mode de fonctionnement mis en oeuvre.

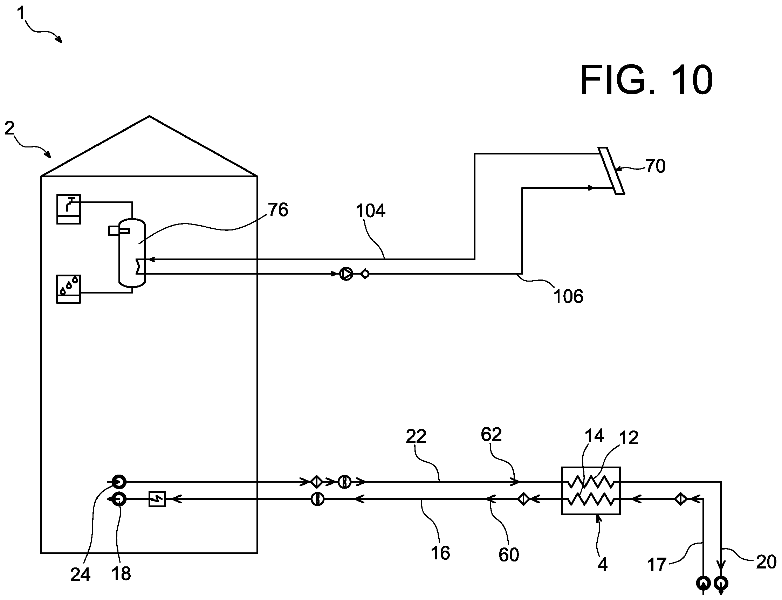

Par conséquent, la figure 9 illustre la conception structurelle du système de ventilation et de chauffage 1, sans faire référence aux divers modes de fonctionnement possibles qui seront décrits ci-après, sur la base des figures 10 à 15. Ce mode de réalisation comporte également de nombreuses similitudes avec les précédents, de sorte que des références numériques identiques ont été adoptées pour les éléments identiques ou similaires. L'une des particularités réside ici dans le fait que le système 1 ne comporte qu'un unique échangeur à double flux d'air, à savoir l'échangeur 4. Cela permet de simplifier la conception du système, et d'en réduire l'encombrement et les coûts.

Le premier échangeur à double flux d'air 4 permet un transfert thermique entre le flux d'air vicié et le flux d'air neuf destinés à transiter respectivement à travers un passage d'air vicié 12 et un passage d'air neuf 14 présents au sein de cet échangeur. La conduite 17 d'amenée d'air neuf est raccordée à l'entrée du passage 14, tandis que la conduite 16 de sortie d'air neuf est raccordée à la sortie de ce même passage 14. Cette conduite 16 chemine jusqu'à la sortie d'air neuf 18 du système, raccordée au bâtiment 2. De manière analogue, la conduite 20 d'extraction d'air vicié est raccordée à la sortie du passage 12, tandis que la conduite 22 d'entrée d'air vicié est raccordée à l'entrée de ce même passage 12. Cette conduite 22 chemine jusqu'à une entrée d'air vicié 24 du système, raccordée au bâtiment 2.

Il est par ailleurs prévu, entre les conduites 16 et 17, un conduit 15 de contournement du passage d'air neuf 14, de même qu'il peut être prévu, entre les conduites 20, 22, un conduit (non représenté) de contournement du passage d'air vicié 12. Des vannes de régulation permettent de rendre ces conduits actifs ou inactifs. En outre, en aval de l'échangeur 4, il est raccordé une entrée secondaire 17' d'air neuf sur la conduite 16, de même qu'il est raccordé une sortie secondaire 20' d'air vicié sur la conduite 22. Ici aussi, des vannes de régulation permettent de rendre ces entrée/sortie actives ou inactives.

De la même façon que dans les modes précédents, des ventilateurs sont agencés de manière à permettre la circulation des flux au sein des conduites 22, 16. Il est noté par ailleurs que des ventilateurs ou des moyens analogues équipent également de préférence les autres circuits du système 1, qui seront décrits ci-après.

Il peut également être agencé une batterie électrique sur la conduite de sortie d'air neuf 16, cette batterie servant par exemple de chauffage d'appoint de secours.

Le système comporte en outre un échangeur air/liquide 8 présentant un passage d'air 40 ainsi qu'un passage de liquide 42. A une première extrémité, le passage d'air 40 est relié à une conduite 100 qui se raccorde à une sortie du réacteur 10. Entre cette sortie du réacteur 10 et l'échangeur air/liquide 8, il est agencé une conduite de dérivation 34 permettant de raccorder la conduite de sortie d'air 100 à la conduite 22 d'entrée d'air vicié. De manière analogue, toujours entre cette sortie du réacteur 10 et l'échangeur air/liquide 8, il est agencé une conduite de dérivation 50 permettant de raccorder la conduite de sortie d'air 100 à la conduite 16 de sortie d'air neuf.

A l'autre extrémité, le passage d'air 40 est relié à une conduite 102 qui se raccorde à une entrée du réacteur 10. Une conduite de dérivation 26 relie cette conduite 102 à la conduite 22, en un point situé en amont du passage d'air vicié 12.

A une première extrémité du passage de liquide 42, ce dernier est relié à une conduite 56, tandis que sur la seconde extrémité opposée, ce passage est relié à une autre conduite 58. Les conduites 56, 58 sont respectivement raccordées sur une conduite chaude 104 et une conduite froide 106, ces conduites 104, 106 reliant un dispositif de génération de chaleur 70 à un système 76 de chauffage hydraulique et/ou d'eau chaude sanitaire. Les conduites 56, 58 sont reliées entre elles par un conduit de dérivation 108, régulé par une vanne 110.

Les figures 10 à 15 illustrent différents modes de fonctionnement possibles pour ce système 1. A cet égard, il est indiqué que sur chacune de ces figures, les conduites représentées sont les conduites rendues actives pour la mise en oeuvre du mode de fonctionnement désiré, tandis que les conduites non représentées restent inactives, c'est-à-dire condamnées par des vannes ou similaires prévues à cet effet.

Tout d'abord en référence à la figure 10, il est représenté une première configuration du système 1, retenue pour l'obtention d'un mode de fonctionnement dit « standard », hors période de chauffe. Il est noté que ce système dit de « VMC double flux » permet le renouvellement de l'air dans le bâtiment. Il est donc en fonctionnement toute l'année. Cependant, le premier échangeur air/air peut être court-circuité lorsque l'écart de température entre l'extérieur et l'intérieur est faible, généralement au printemps et en automne, de manière à éviter des pertes de charge inutiles. Le fonctionnement des ventilateurs est néanmoins maintenu.

Dans ce mode de fonctionnement, le réacteur n'est pas utilisé, seul un échange thermique se produisant au sein du premier échangeur 4 entre d'une part un flux d'air neuf 60 venant de l'extérieur et transitant par le passage 14 avant de cheminer dans la conduite 16 jusqu'à la sortie 18, et d'autre part un flux d'air vicié 62 provenant de l'entrée 24 et transitant par le passage 12 après avoir traversé l'intégralité de la conduite 22.

Dans le cadre de la présente invention, ce mode de fonctionnement est en particulier utilisé lorsqu'il n'y a pas ou peu de besoin en chaleur à l'intérieur du bâtiment, impliquant qu'aucun apport de chaleur venant du réacteur n'est requis. Il s'agit alors d'un fonctionnement reposant sur un simple échange de chaleur entre les deux flux d'air 60, 62.

Par ailleurs, le chauffage du système 76, ici un ballon d'eau chaude, peut être activé indépendamment du fonctionnement de la « VMC double flux », en fonction des besoins rencontrés. Ce chauffage hydraulique s'effectue d'une manière connue de l'homme du métier, avec les capteurs solaires 70. Cela s'applique également pour les autres modes de fonctionnement décrits ci-dessous.

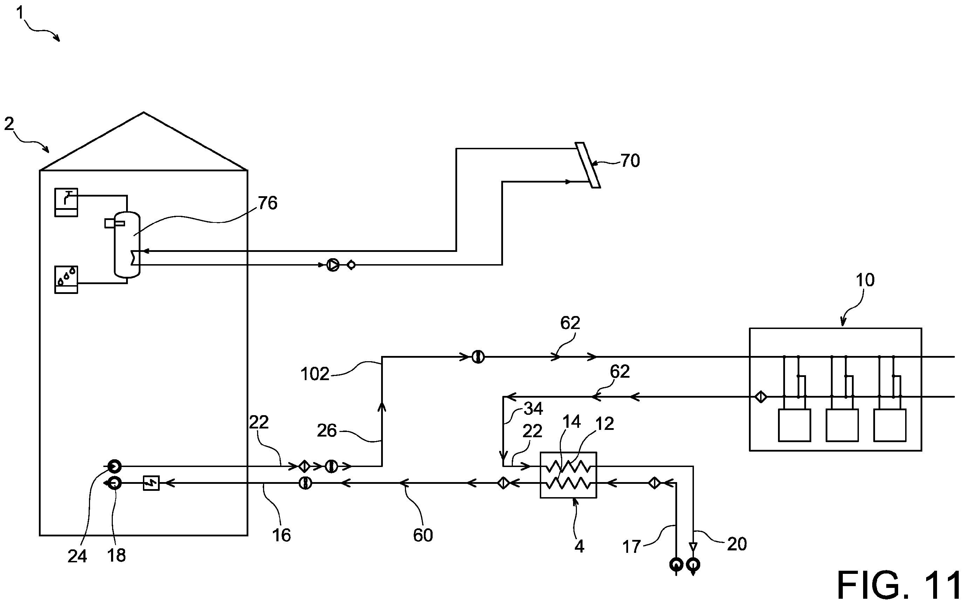

En référence à la figure 11, il est représenté une autre configuration du système 1, retenue pour l'obtention d'un mode de fonctionnement basé sur l'utilisation du réacteur 10 pour chauffer indirectement le flux d'air neuf 60. Ce mode de fonctionnement, généralement adopté durant l'hiver, permet de bénéficier d'un flux d'air neuf 60 de température supérieure à celle qui serait obtenue par simple échange thermique avec le flux vicié 62.

En effet, l'originalité se situe ici dans le fait que le flux vicié 62 pénétrant par l'entrée 24 est dirigé à travers la conduite de dérivation 26, puis rejoint la conduite 102 avant de pénétrer dans le réacteur 10. Au sein de ce réacteur, il se produit une réaction exothermique d'hydratation du sel stocké dans ce réacteur. Le flux d'air vicié 62 sort alors avec une température plus élevée, avant d'être dirigé vers la conduite de dérivation 34 puis la conduite 22, à partir de laquelle le flux vicié 62 pénètre dans le passage 12 pour l'échange de chaleur avec le flux d'air neuf 60 entrant dans ce dernier.

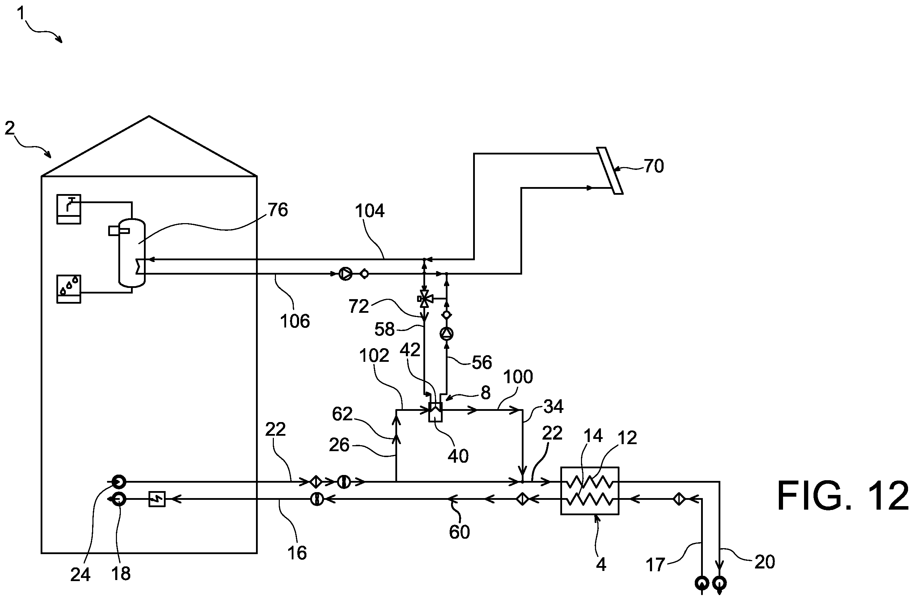

La figure 12 montre une autre configuration permettant un mode de fonctionnement basé sur l'utilisation d'un flux liquide chaud pour chauffer le flux d'air vicié 62. Ce mode de fonctionnement est également utilisé en hiver, lorsque de la chaleur peut être apportée par des capteurs solaires thermiques 70. Cela permet notamment d'économiser l'énergie stockée dans le réacteur 10.

En effet, les capteurs 70 permettent ici de chauffer directement ou indirectement le flux liquide 72 circulant à travers les conduites 104, 58, avant de cheminer à travers le passage de liquide 42 de l'échangeur air/liquide 8, puis d'être évacué par les conduites 56, 106 afin d'être à nouveau chauffé par les capteurs solaires 70.

Le flux liquide chaud 72 est prévu pour transmettre de la chaleur au flux d'air vicié 62 transitant par le passage d'air 40, et en provenance du conduit de dérivation 26. A la sortie du passage 40, le flux 62 rejoint l'échangeur 4 via la conduite de dérivation 34 et la conduite 22. C'est donc à travers cet échangeur 4 que la chaleur solaire est indirectement transmise au flux d'air neuf 60 circulant en direction du bâtiment 2.

L'avantage d'une telle configuration réside dans le fait que dans ce mode de chauffage solaire, le flux d'air neuf 60 circule seulement dans les conduites 16, 17 qui ne sont jamais traversées par le flux d'air vicié 62, dans quelque autre mode que ce soit. Ce mode de fonctionnement, utilisable seulement lorsque l'énergie solaire est suffisante, permet par ailleurs d'économiser l'énergie du réacteur, comme cela a été évoqué ci-dessus.

En outre, il est possible de dériver une partie du flux hydraulique vers le ballon 76, afin d'éviter de dépasser une température maximale au sein du système aéraulique.

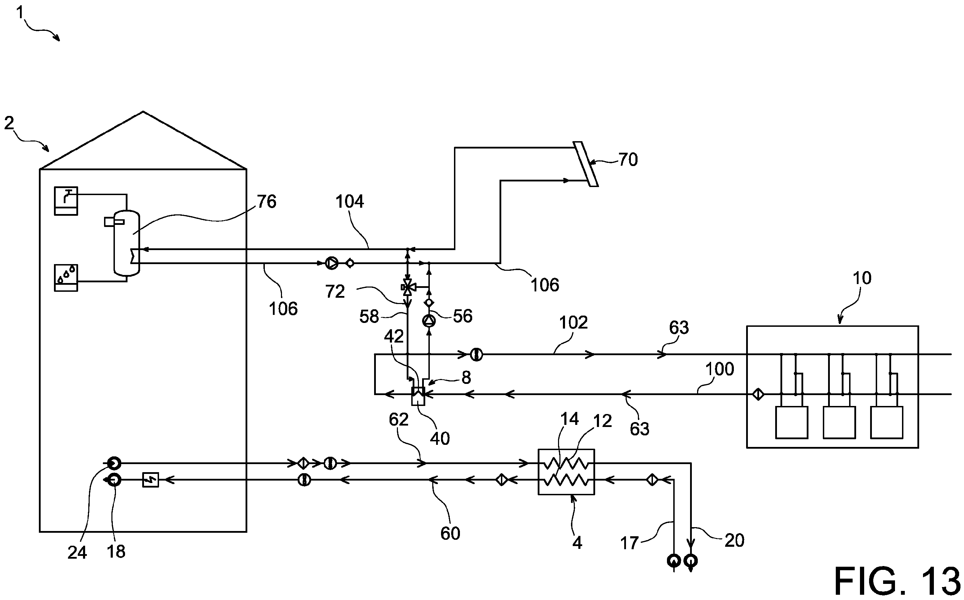

La figure 13 montre une autre configuration permettant un mode de fonctionnement basé sur l'utilisation d'un flux liquide chaud :

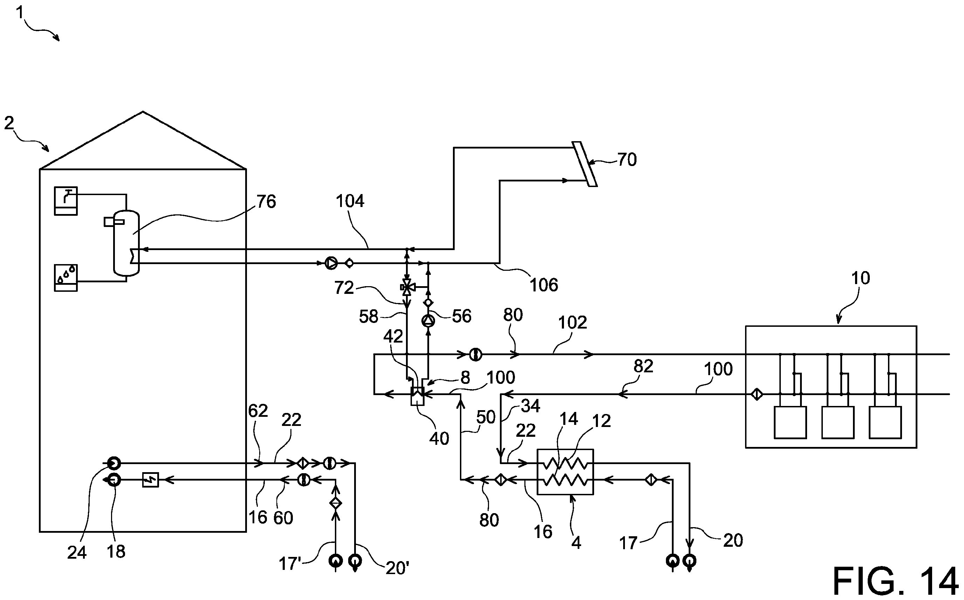

- soit pour chauffer les éléments du réacteur 10 (stockage sensible) en vue d'une restitution prochaine de la chaleur, décrite en référence à la figure 11 ;
- soit pour amener les réactifs en chauffe, et préparer ainsi le mode de fonctionnement de régénération du réacteur, décrit en référence à la figure 14. Ce mode est particulièrement utile quand il y a de l'énergie solaire disponible, alors que le bâtiment nécessite l'usage de l'échangeur double-flux.

Dans ce mode de chauffage sensible, le système de VMC double flux standard peut continuer à fonctionner, comme cela est schématisé sur la figure 13. En revanche, le réacteur n'est pas actif, seule la chaleur solaire issue des capteurs 70 étant indirectement utilisée pour chauffer les réactifs du réacteur 10. Pour ce faire, le liquide chaud, provenant des capteurs 70 et circulant à travers les conduites 104, 58, traverse le passage de liquide 42 de l'échangeur 8 au sein duquel l'échange thermique s'effectue avec un flux d'air 63 traversant le passage d'air 40. Ce flux d'air de préchauffage 63 circule en circuit fermé successivement dans la conduite 102, le réacteur 10, la conduite 100 et l'échangeur 8 au sein duquel il reçoit la chaleur solaire via le liquide chaud provenant des capteurs 70.

Durant ce mode de fonctionnement, le liquide chaud provenant des capteurs peut circuler en intégralité dans l'échangeur 8, ou bien une partie de ce liquide peut être dirigée vers le ballon d'eau chaude 76, via une vanne de régulation appropriée placée à la jonction entre les conduites 58, 104, ou bien par équilibrage des circulateurs situés sur les conduites 106 et 56. Cela est notamment privilégié lorsque les réactifs ne peuvent pas utiliser la totalité de la chaleur issue des capteurs 70.

En référence à la figure 14, il est représenté le système 1 dans une autre configuration permettant un mode de fonctionnement dont le but est la régénération du réacteur 10, ce mode de fonctionnement étant préférentiellement retenu durant l'été, et éventuellement précédé du mode de fonctionnement décrit en référence à la figure 13. Avant tout, il est noté que le mode de fonctionnement standard schématisé sur la figure 10 ne peut pas être activé durant la régénération, étant donné que celle-ci requiert préférentiellement l'utilisation de l'échangeur 4. Par conséquent, durant cette régénération du sel du réacteur, seule une ventilation est assurée par l'entrée secondaire 17' et la sortie secondaire 20'.

Pour la régénération du sel du réacteur, il est également utilisé l'énergie solaire via les capteurs solaires 70 raccordés à l'échangeur air/liquide par les conduites 56, 58, 104, 106. Ainsi, le flux liquide chaud 72 circule à travers le passage de liquide 42 pour chauffer un second flux d'air neuf 80 pénétrant dans l'échangeur 4 par la conduite 17, avant de transiter par la conduite 16 puis par la conduite de dérivation 50 avant de rejoindre la conduite 102 l'amenant au passage d'air 40 de l'échangeur 8.

En sortant de cet échangeur 8, le flux d'air échauffé 80 transite par la conduite 102 avant de pénétrer dans le réacteur 10, au sein duquel il se produit une réaction endothermique de déshydratation du sel, permettant sa régénération en vue d'emmagasiner de l'énergie pour l'hiver suivant. Cela traduit la fonction de stockage thermochimique que remplit le réacteur 10.

Après sa sortie du réacteur, le flux d'air 82 qui vient de réagir est transporté par les conduites 100, 34, 22 jusqu'au passage d'air 12 de l'échangeur 4, au sein duquel un échange de chaleur s'effectue avec le flux 80 dont il est issu. Comme pour le mode de fonctionnement précédent, durant cette régénération, le fluide chaud issu des capteurs 70 peut en partie être dirigé vers le ballon d'eau chaude 76, et non transiter intégralement par l'échangeur air/liquide 8.

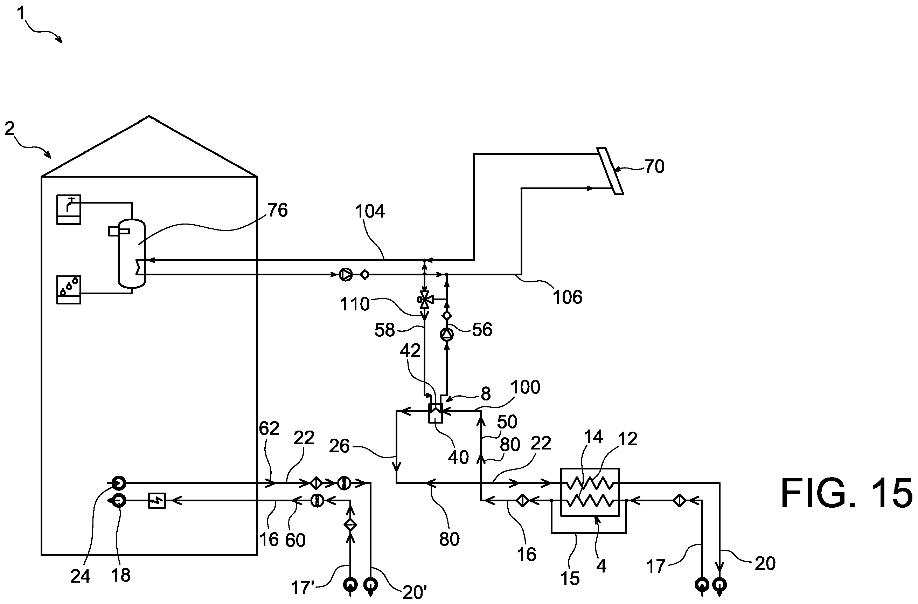

La figure 15 montre une configuration permettant un mode de fonctionnement d'évacuation de l'excédent d'énergie solaire, préférentiellement mis en oeuvre durant l'été. Dans ce mode, le réacteur reste inactif. Le but est d'évacuer une partie de la chaleur hydraulique provenant des capteurs 70, lorsque le réacteur 10 ne peut plus l'exploiter pour sa régénération, par exemple lorsque les sels réactifs ont été totalement déshydratés.

Dans ce mode, la ventilation d'air par les entrée et sortie secondaires 17', 20' reste conservée. La particularité provient de l'échangeur air/air 4, puisque le flux d'air neuf 80 entrant par la conduite 17 ne transite pas par le passage d'air 14 de cet échangeur, mais par la conduite de dérivation 15 pour rejoindre la conduite 16. Ensuite, ce flux 80 passe par la conduite de dérivation 50 et la conduite 102 avant de circuler à travers le passage d'air 40, où il refroidit le liquide chaud provenant de la conduite 58 et transitant par le passage de liquide 42 de l'échangeur 8. Ensuite, le flux d'air 80 circule à travers les conduites 102, 26, 22 avant d'être extrait du système 1, éventuellement en passant par le passage d'air 12 ou en court-circuitant ce dernier.

Bien entendu, diverses modifications peuvent être apportées par l'homme du métier à l'invention qui vient d'être décrite, uniquement à titre d'exemples non limitatifs.

## Revendications

1. Système (1) de ventilation et de chauffage d'un bâtiment (2), comprenant une entrée d'air vicié (24) destinée à être raccordée audit bâtiment de manière à être alimentée par l'air vicié sortant de ce dernier, ainsi qu'une sortie d'air neuf (18) destinée à être raccordée audit bâtiment de manière à alimenter ce dernier en air neuf, le système comportant également un premier échangeur (4) à double flux d'air, permettant un transfert thermique entre un flux d'air vicié (62) et un flux d'air neuf (60) destinés à transiter respectivement à travers un passage d'air vicié (12) et un passage d'air neuf (14) pratiqués dans ledit échangeur (4), ladite entrée d'air vicié du système communiquant avec le passage d'air vicié dudit premier échangeur et ladite sortie d'air neuf du système communiquant avec le passage d'air neuf de cet échangeur,
   **caractérisé en ce qu'**il comporte en outre un réacteur thermochimique (10) permettant un stockage thermochimique, ledit réacteur étant agencé de manière à pouvoir être traversé par au moins une partie du flux d'air vicié (62) entrant dans ladite entrée d'air vicié du système, pour y engendrer une réaction d'hydratation exothermique provoquant un échauffement dudit flux d'air vicié prévu pour être conduit au moins en partie, après son passage à travers le réacteur (10), vers ledit passage d'air vicié (12) du premier échangeur.

2. Système selon la revendication 1, **caractérisé en ce qu'**il comporte des moyens (84) permettant de répartir, de manière contrôlée, le flux d'air vicié (62) entre une première voie vers ledit réacteur (10) et une seconde voie directement vers ledit passage d'air vicié (12) du premier échangeur.

3. Système selon la revendication 1 ou la revendication 2, **caractérisé en ce qu'**il comporte de plus un échangeur air/liquide (8) présentant un passage d'air (40) ainsi qu'un passage de liquide (42).

4. Système selon la revendication 3, **caractérisé en ce que** ledit échangeur air/liquide (8) est conçu de manière à ce que son passage d'air (40) puisse être traversé par le flux d'air neuf (60) sortant du premier échangeur (4), de sorte que ce flux d'air neuf soit échauffé par un flux liquide chaud (72) traversant ledit passage de liquide (42), ledit flux d'air neuf (60) étant conduit, à sa sortie de l'échangeur air/liquide (8), vers ladite sortie d'air neuf (18) du système.

5. Système selon la revendication 4, **caractérisé en ce que** ledit flux liquide chaud (72) est destiné à être chauffé par des capteurs solaires (70) faisant partie intégrante dudit système (1).

**6.** Système selon l'une quelconque des revendications 3 à 5, **caractérisé en ce que** ledit échangeur air/liquide (8) est conçu de manière à ce que son passage d'air (40) puisse être traversé par le flux d'air vicié (62) sortant du réacteur, de sorte que le flux d'air vicié échauffe un flux liquide froid (74) traversant ledit passage de liquide (42), ledit flux d'air vicié (62) étant conduit, à sa sortie de l'échangeur air/liquide, vers le premier échangeur (4) de manière à traverser ledit passage d'air vicié (12) de ce dernier.

**7.** Système selon la revendication 6, **caractérisé en ce qu'**il comprend un circuit de chauffage (76) alimenté par ledit flux liquide (74) échauffé par le flux d'air vicié (62) sortant du réacteur (10).

**8.** Système selon l'une quelconque des revendications 3 à 7, **caractérisé en ce que** ledit échangeur air/liquide (8) est conçu de manière à ce que son passage d'air (40) puisse être traversé par un second flux d'air neuf (80), de sorte que ce second flux d'air neuf soit échauffé par un flux liquide chaud (72) traversant ledit passage de liquide (42), ledit second flux d'air neuf (80) échauffé étant conduit, à sa sortie de l'échangeur air/liquide (8), vers ledit réacteur (10) de manière à y engendrer une réaction de déshydratation destinée à régénérer ledit réacteur (10).

**9.** Système selon la revendication 3, **caractérisé en ce qu'**il est conçu de manière à ce que le passage d'air (40) de l'échangeur air/liquide (8) puisse être traversé par le flux d'air vicié (62) sortant du bâtiment (2), de sorte que ce flux d'air vicié soit échauffé par un flux liquide chaud (72) traversant ledit passage de liquide (42), ledit flux d'air vicié (62) étant conduit, à sa sortie de l'échangeur air/liquide (8), vers ledit passage d'air vicié (12) de l'échangeur (4).

**10.** Système selon la revendication 9, **caractérisé en ce qu'**il est conçu de manière à ce que le passage d'air (40) de l'échangeur air/liquide (8) puisse être traversé par un second flux d'air neuf (80), de sorte que ce second flux d'air neuf soit échauffé par un flux liquide chaud (72) traversant ledit passage de liquide (42), ledit second flux d'air neuf (80) échauffé étant conduit, à sa sortie de l'échangeur air/liquide (8), vers ledit réacteur (10) de manière à y engendrer une réaction de déshydratation destinée à régénérer ledit réacteur (10), ledit flux d'air (82) sortant du réacteur (10) étant préférentiellement dirigé vers le premier échangeur de chaleur (4) pour traverser le passage d'air vicié (12), tandis que le second flux d'air neuf (80) traverse préférentiellement le passage d'air neuf (14).

**11.** Système selon la revendication 3, **caractérisé en ce qu'**il comprend un second échangeur (6) à double flux d'air, permettant un transfert thermique entre une partie (62") du flux d'air vicié (62) et un second flux d'air neuf (96) destinés à transiter respectivement à travers un passage d'air vicié (30) et un passage d'air neuf (46) pratiqués dans ledit échangeur (8), ledit système étant conçu de manière à permettre l'intégration dudit second flux d'air neuf (96) dans au moins une partie dudit flux d'air vicié (62) avant l'entrée de celle-ci dans le réacteur (10), et étant également conçu de sorte que ladite au moins une partie dudit flux d'air vicié (62) sortant du réacteur (10) puisse passer à travers ledit échangeur air/liquide (8), puis être acheminé en partie à travers ledit passage d'air vicié (30) dudit second échangeur (6) à double flux d'air.

**12.** Système selon la revendication 11, **caractérisé en ce qu'**il est conçu de sorte que ladite au moins une partie du flux d'air vicié (62) sortant du réacteur (10) puisse passer à travers ledit échangeur air/liquide (8), puis être réparti de manière contrôlée entre une première voie vers ledit passage d'air vicié (30) dudit second échangeur (6) à double flux d'air, et une seconde voie vers ledit passage d'air vicié (12) dudit premier échangeur (4) à double flux d'air.

**13.** Système selon l'une quelconque des revendications précédentes, **caractérisé en ce que** ledit réacteur (10) est un réacteur permettant des réactions d'hydratation exothermiques et des réactions de déshydratation endothermiques entre un matériau réactif solide et la vapeur d'eau contenue dans le flux d'air humide vicié, ledit matériau réactif étant de préférence un sel.

**14.** Bâtiment (2) équipé d'un système (1) selon l'une quelconque des revendications précédentes.

**15.** Bâtiment (2) selon la revendication 13, **caractérisé en ce qu'**il s'agit d'un bâtiment de l'habitat ou du tertiaire.

**16.** Procédé de ventilation et de chauffage d'un bâtiment à l'aide d'un système (1) selon l'une quelconque des revendications 1 à 13, **caractérisé en ce qu'**il comprend une étape visant à faire traverser dans ledit réacteur (10) au moins une partie du flux d'air vicié (62) entrant dans ladite entrée d'air vicié (24) du système, de manière à y engendrer une réaction d'hydratation exothermique provoquant un échauffement dudit flux d'air vicié (62) qui est ensuite conduit au moins en partie, après son passage à travers le réacteur (10), vers ledit passage d'air vicié (12) du premier échangeur (4).

**Patentansprüche**

**1.** System (1) zum Belüften und Beheizen eines Gebäudes (2), enthaltend einen Ablufteinlass (24), der dazu bestimmt ist, mit dem Gebäude so verbunden zu werden, dass er mit der aus diesem austretenden Abluft versorgt wird, sowie einen Frischluftauslass (18), der dazu bestimmt ist, mit dem Gebäude so verbunden zu werden, dass er dieses mit Frischluft versorgt, wobei das System auch einen ersten zweiflutigen Wärmetauscher (4) aufweist, welcher einen Wärmeübergang zwischen einem Abluftstrom (62) und einem Frischluftstrom (60) gestattet, die dazu bestimmt sind, jeweils durch einen Abluftdurchlass (12) bzw. einen Frischluftdurchlass (14) zu strömen, die in dem Wärmetauscher (4) ausgeführt sind, wobei der Ablufteinlass des Systems mit dem Abluftdurchlass des ersten Wärmetauschers kommuniziert und der Frischluftauslass des Systems mit dem Frischluftdurchlass dieses Wärmetauschers kommuniziert,

**dadurch gekennzeichnet, dass** es ferner einen thermochemischen Reaktor (10) aufweist, mit dem eine thermochemische Speicherung möglich ist, wobei der Reaktor so angeordnet ist, dass er von zumindest einem Teil des Abluftstroms (62) durchströmt werden kann, der in den Ablufteinlass des Systems eintritt, um darin eine exotherme Hydrationsreaktion zu erzeugen, die ein Erwärmen des Abluftstroms bewirkt, der dazu vorgesehen ist, nach seinem Durchströmen durch den Reaktor (10) zumindest teilweise zum Abluftdurchlass (12) des ersten Wärmetauschers geführt zu werden.

2. System nach Anspruch 1, **dadurch gekennzeichnet, dass** es Mittel (84) enthält, die gestatten, den Abluftstrom (62) in kontrollierter Weise zwischen einem ersten Strömungsweg zum Reaktor (10) und einem zweiten Strömungsweg direkt zum Abluftdurchlass (12) des ersten Wärmetauschers aufzuteilen.

3. System nach Anspruch 1 oder Anspruch 2, **dadurch gekennzeichnet, dass** es ferner einen Luft-/Flüssigkeits-Wärmetauscher (8) enthält, der einen Luftdurchlass (40) sowie einen Flüssigkeitsdurchlass (42) aufweist.

4. System nach Anspruch 3, **dadurch gekennzeichnet, dass** der Luft-/Flüssigkeits-Wärmetauscher (8) so ausgelegt ist, dass sein Luftdurchlass (40) von dem Frischluftstrom (60) durchströmt werden kann, der aus dem ersten Wärmetauscher (4) austritt, so dass dieser Frischluftstrom über einen heißen Flüssigkeitsstrom (72) erwärmt wird, der durch den Flüssigkeitsdurchlass (42) strömt, wobei der Frischluftstrom (60) bei seinem Ausströmen aus dem Luft-/Flüssigkeits-Wärmetauscher (8) zum Frischluftauslass (18) des Systems geführt wird.

5. System nach Anspruch 4, **dadurch gekennzeich-**

**net, dass** der heiße Flüssigkeitsstrom (72) dazu bestimmt ist, über Sonnenkollektoren (70) erwärmt zu werden, die fester Bestandteil des Systems (1) sind.

6. System nach einem der Ansprüche 3 bis 5, **dadurch gekennzeichnet, dass** der Luft-/Flüssigkeits-Wärmetauscher (8) so ausgelegt ist, dass sein Luftdurchlass (40) von dem Abluftstrom (62) durchströmt werden kann, der aus dem Reaktor austritt, so dass der Abluftstrom einen kalten Flüssigkeitsstrom (74) erwärmt, der durch den Flüssigkeitsdurchlass (42) strömt, wobei der Abluftstrom (62) bei seinem Ausströmen aus dem Luft-/Flüssigkeits-Wärmetauscher zum ersten Wärmetauscher (4) so geführt wird, dass er den Abluftdurchlass (12) des letztgenannten durchströmt.

7. System nach Anspruch 6, **dadurch gekennzeichnet, dass** es einen Heizkreis (76) aufweist, der mit dem Flüssigkeitsstrom (74) versorgt wird, der über den Abluftstrom (62) erwärmt wird, der aus dem Reaktor (10) ausströmt.

8. System nach einem der Ansprüche 3 bis 7, **dadurch gekennzeichnet, dass** der Luft-/Flüssigkeits-Wärmetauscher (8) so ausgelegt ist, dass sein Luftdurchlass (40) von einem zweiten Frischluftstrom (80) durchströmt werden kann, so dass dieser zweite Frischluftstrom über einen heißen Flüssigkeitsstrom (72) erwärmt wird, der durch den Flüssigkeitsdurchlass (42) strömt, wobei der erwärmte, zweite Frischluftstrom (80) bei seinem Ausströmen aus dem Luft-/Flüssigkeits-Wärmetauscher (8) zum Reaktor (10) geführt wird, so dass darin eine Deshydratationsreaktion erzeugt wird, die dazu bestimmt ist, den Reaktor (10) zu regenerieren.

9. System nach Anspruch 3, **dadurch gekennzeichnet, dass** es so ausgelegt ist, dass der Luftdurchlass (40) des Luft-/Flüssigkeits-Wärmetauschers (8) von dem Abluftstrom (62) durchströmt werden kann, der aus dem Gebäude (2) austritt, so dass der Abluftstrom über einen heißen Flüssigkeitsstrom (72) erwärmt wird, der durch den Flüssigkeitsdurchlass (42) strömt, wobei der Abluftstrom (62) bei seinem Ausströmen aus dem Luft-/Flüssigkeits-Wärmetauscher (8) zum Abluftdurchlass (12) des Wärmetauschers (4) geführt wird.

10. System nach Anspruch 9, **dadurch gekennzeichnet, dass** es so ausgelegt ist, dass der Luftdurchlass (40) des Luft-/Flüssigkeits-Wärmetauschers (8) von einem zweiten Frischluftstrom (80) durchströmt werden kann, so dass dieser zweite Frischluftstrom über einen heißen Flüssigkeitsstrom (72) erwärmt wird, der durch den Flüssigkeitsdurchlass (42) strömt, wobei der erwärmte, zweite Frischluftstrom (80) bei seinem Ausströmen aus dem Luft-/Flüssigkeits-Wärmetauscher zum Reaktor (10) geführt wird, so dass darin eine Deshydratationsreaktion erzeugt wird, die dazu bestimmt ist, den Reaktor (10) zu regenerieren, wobei der aus dem Reaktor (10) ausströmende Luftstrom (82) vorzugsweise zum ersten Wärmetauscher (4) geleitet wird, um den Abluftdurchlass (12) zu durchströmen, während der zweite Frischluftstrom (80) vorzugsweise den Frischluftdurchlass (14) durchströmt.

**11.** System nach Anspruch 3, **dadurch gekennzeichnet, dass** es einen zweiten zweiflutigen Wärmetauscher (6) aufweist, welcher einen Wärmeübergang zwischen einem Teil (62") des Abluftstroms (62) und einem zweiten Frischluftstrom (96) gestattet, die dazu bestimmt sind, jeweils durch einen Abluftdurchlass (30) bzw. einen Frischluftdurchlass (46) zu strömen, die in dem Wärmetauscher (8) ausgeführt sind, wobei das System so ausgelegt ist, dass es die Einbindung des zweiten Frischluftstroms (96) in zumindest einen Teil des Abluftstroms (62) vor dem Einlass desselben in den Reaktor (10) gestattet, und dass es auch derart ausgelegt ist, dass der zumindest eine Teil des Abluftstroms (62), der aus dem Reaktor (10) ausströmt, durch den Luft-/Flüssigkeits-Tauscher (8) strömen kann, dann teilweise durch den Abluftdurchlass (30) des zweiten zweiflutigen Wärmetauschers (6) geleitet werden kann.

**12.** System nach Anspruch 11, **dadurch gekennzeichnet, dass** es dazu ausgelegt ist, dass der zumindest eine Teil des Abluftstroms (62), der aus dem Reaktor (10) ausströmt, durch den Luft-/Flüssigkeitstauscher (8) strömen kann, dann in kontrollierter Weise zwischen einem ersten Strömungsweg zum Abluftdurchlass (30) des zweiten zweiflutigen Wärmetauschers (6) und einem zweiten Strömungsweg zum Abluftdurchlass (12) des ersten zweiflutigen Wärmetauschers (4) aufgeteilt wird.

**13.** System nach einem der vorangehenden Ansprüche, **dadurch gekennzeichnet, dass** der Reaktor (10) ein Reaktor ist, der exotherme Hydratationsreaktionen und endotherme Deshydratationsreaktionen zwischen einem reaktiven Feststoffmaterial und dem in dem feuchten Abluftstrom enthaltenen Wasserdampf gestattet, wobei das reaktive Material vorzugsweise ein Salz ist.

**14.** Gebäude (2), das mit einem System (1) nach einem der vorangehenden Ansprüche ausgestattet ist.

**15.** Gebäude (2) nach Anspruch 13, **dadurch gekennzeichnet, dass** es sich um ein Wohn- oder Dienstleistungsgebäude handelt.

**16.** Verfahren zum Belüften und Beheizen eines Gebäudes mit Hilfe eines Systems (1) nach einem der Ansprüche 1 bis 13, **dadurch gekennzeichnet, dass** es einen Schritt umfasst, der darauf abzielt, zumindest einen Teil des Abluftstroms (62), der in denAblufteinlass (24) des Systems einströmt, durch den Reaktor (10) strömen zu lassen, so dass darin eine exotherme Hydratationsreaktion erzeugt wird, die eine Erwärmung des Abluftstroms (62) bewirkt, der dann nach seinem Durchströmen durch den Reaktor (10) zumindest teilweise zum Abluftdurchlass (12) des ersten Wärmetauschers (4) geführt wird.

**Claims**

**1.** System (1) for ventilating and heating a building (2), comprising a vitiated air inlet (24) intended to be connected to said building in such a way as to be supplied by the vitiated air exiting from the latter, as well as a fresh air outlet (18) intended to be connected to said building in such a way as to supply the latter with fresh air, with the system also comprising a first dual-air-flow exchanger (4), allowing for a heat transfer between a flow of vitiated air (62) and a flow of fresh air (60) intended to transit respectively through a passage of vitiated air (12) and a passage of fresh air (14) made in said exchanger (4), said vitiated air inlet of the system communicating with the passage of vitiated air of said first exchanger and said fresh air outlet of the system communicating with the passage of fresh air of this exchanger, **characterised in that** it further comprises a thermochemical reactor (10) allowing for thermochemical storage, said reactor being arranged in such a way as to be able to be passed through by at least one portion of the flow of vitiated air (62) entering into said vitiated air inlet of the system, in order to generate an exothermal hydration reaction therein causing a heating of said flow of vitiated air provided to be conveyed at least partially, after the passage thereof through the reactor (10), towards said passage of vitiated air (12) of the first exchanger.

**2.** System according to claim 1, **characterised in that** it comprises means (84) allowing for the distribution, in a controlled manner, of the flow of vitiated air (62) between a first channel towards said reactor (10) and a second channel directly towards said passage of vitiated air (12) of the first exchanger.

**3.** System according to claim 1 or claim 2, **characterised in that** it further comprises an air/liquid exchanger (8) having a passage of air (40) as well as a passage of liquid (42).

**4.** System according to claim 3, **characterised in that** said air/liquid exchanger (8) is designed in such a way that its passage of air (40) can be passed through by the flow of fresh air (60) exiting from the first exchanger (4), in such a way that this flow of fresh air is heated by a hot liquid flow (72) passing through said passage of liquid (42), said flow of fresh air (60) being conveyed, at the exit thereof from the air/liquid exchanger (8), towards said fresh air outlet (18) of the system.

5. System according to claim 4, **characterised in that** said hot liquid flow (72) is intended to be heated by solar sensors (70) that are an integral part of said system (1).

6. System according to any of claims 3 to 5, **characterised in that** said air/liquid exchanger (8) is designed in such a way that the passage of air (40) thereof can be passed through by the flow of vitiated air (62) exiting from the reactor, in such a way that the flow of vitiated air heats a cold liquid flow (74) passing through said liquid passage (42), said flow of vitiated air (62) being conveyed, at the exit thereof from the air/liquid exchanger, towards the first exchanger (4) in such a way as to pass through said passage of vitiated air (12) of the latter.

7. System according to claim 6, **characterised in that** it comprises a heating circuit (76) supplied by said liquid flow (74) heated by the flow of vitiated air (62) exiting from the reactor (10).

8. System according to any of claims 3 to 7, **characterised in that** said air/liquid exchanger (8) is designed in such a way that the passage of air (40) thereof can be passed through by a second flow of fresh air (80), in such a way that this second flow of fresh air is heated by a hot liquid flow (72) passing through said passage of liquid (42), said second heated flow of fresh air (80) being conveyed, at the exit thereof from the air/liquid exchanger (8), towards said reactor (10) in such a way as to generate a dehydration reaction intended to regenerate said reactor (10).

9. System according to claim 3, **characterised in that** it is designed in such a way that the passage of air (40) of the air/liquid exchanger (8) can be passed through by the flow of vitiated air (62) existing from the building (2), in such a way that this flow of vitiated air is heated by a hot liquid flow (72) passing through said passage of liquid (42), said flow of vitiated air (62) being conveyed, at the exit thereof from the air/liquid exchanger (8), towards said passage of vitiated air (12) of the exchanger (4).

10. System according to claim 9, **characterised in that** it is designed in such a way that the passage of air (40) from the air/liquid exchanger (8) can be passed through by a second flow of fresh air (80), in such a way that this second flow of fresh air is heated by a hot liquid flow (72) passing through said passage of liquid (42), said second heated flow of fresh air (80) being conveyed, at the exit thereof from the air/liquid exchanger (8), towards said reactor (10) in such a way as to generate a dehydration reaction therein intended to regenerate said reactor (10), said flow of air (82) exiting from the reactor (10) being preferentially directed towards the first heat exchanger (4) in order to pass through the passage of vitiated air (12), while the second flow of fresh air (80) preferentially passes through the passage of fresh air (14).

11. System according to claim 3, **characterised in that** it comprises a second dual-air-flow exchanger (6), allowing for a heat transfer between a portion (62") of the flow of vitiated air (62) and a second flow of fresh air (96) intended to transit respectively through a passage of vitiated air (30) and a passage of fresh air (46) made in said exchanger (8), with said system being designed in such a way as to allow the integration of said second flow of fresh air (96) into at least one portion of said flow of vitiated air (62) before the entry of the latter in the reactor (10), and also being designed in such a way that said at least one portion of said flow of vitiated air (62) exiting from the reactor (10) can pass through said air/liquid exchanger (8), then be partially conveyed through said passage of vitiated air (30) of said second dual-air-flow exchanger (6).

12. System according to claim 11, **characterised in that** it is designed in such a way that said at least one portion of the flow of vitiated air (62) exiting from the reactor (10) can pass through said air/liquid exchanger (8), then be distributed in a controlled manner between a first channel towards said passage of vitiated air (30) of said second dual-air-flow exchanger (6), and a second channel towards said passage of vitiated air (12) of said first dual-air-flow exchanger (4).

13. System as claimed in any preceding claim, **characterised in that** said reactor (10) is a reactor allowing for exothermal hydration reactions and endothermic dehydration reactions between a solid reactive material and the water vapour contained in the flow of vitiated wet air, said reactive material being more preferably a salt.

14. Building (2) provided with a system (1) as claimed in any preceding claim.

15. Building (2) according to claim 13, **characterised in that** it is a building for habitation or a tertiary building.

16. Method for ventilating and heating a building using a system (1) according to any of claims 1 to 13, **characterised in that** it comprises a step aiming to have pass through said reactor (10) at least one portion of the flow of vitiated air (62) entering into said vitiated air inlet (24) of the system, in such a way as to generate an exothermal hydration reaction therein causing a heating of said flow of vitiated air (62) which is then conveyed at least partially, after the passage thereof through the reactor (10), towards said passage of vitiated air (12) of the first exchanger (4).

FIG. 1

EP 2 917 656 B1

EP 2 917 656 B1

FIG. 2

FIG. 3

EP 2 917 656 B1

FIG. 4

EP 2 917 656 B1

FIG. 5

FIG. 6

EP 2 917 656 B1

FIG. 7

EP 2 917 656 B1

FIG. 8

EP 2 917 656 B1

FIG. 9

FIG. 10

EP 2 917 656 B1

FIG. 11

EP 2 917 656 B1

FIG. 12

EP 2 917 656 B1

FIG. 13

FIG. 14

FIG. 15

**EP 2 917 656 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0053979 A